# EUROPÄISCHE PATENTANMELDUNG

(11) **EP 4 378 917 A1**
(43) Veröffentlichungstag der Anmeldung: **05.06.2024**
(21) Anmeldenummer: 23208118.2
(22) Anmeldetag: 07.11.2023
(51) Int. Cl.: C06B 21/00, C06B 23/00

(54) **TREIBLADUNGSELEMENT UND VERFAHREN ZUR HERSTELLUNG DES TREIBLADUNGSELEMENTS**

(30) Priorität: 01.12.2022 DE 102022131842
(71) Anmelder: ZF Airbag Germany GmbH, 84544 Aschau a. Inn (DE)
(72) Erfinder: Wienhold, Sebastian, 85646 Anzing (DE)
(74) Vertreter: ZF Patentabteilung - DIPS

(57) **Zusammenfassung**

Die Erfindung betrifft ein Treibladungselement, wobei das Treibladungselement die folgenden Komponenten umfasst:
(A) mindestens ein pyrotechnisches Material;
(B) mindestens ein Verarbeitungshilfsmittel auf Basis einer Monocarbonsäure mit der folgenden Formel

R-COOH

wobei R einen organischen Rest darstellt. Ferner wird ein Verfahren zur Herstellung des Treibladungselements beschrieben.

## Beschreibung

Die Erfindung betrifft ein Treibladungselement für eine Sicherheitseinrichtung und ein Verfahren zur Herstellung des Treibladungselements.

Treibladungselemente für Sicherheitseinrichtungen sind im Stand der Technik bekannt. Üblicherweise werden Treibladungselemente in Gasgeneratoren für Sicherheitsvorrichtungen verwendet, insbesondere in Sicherheitseinrichtungen für Fahrzeuge und Personenschutzeinrichtungen. Um Fahrzeuginsassen bei einem Unfall zu schützen, sind in einem Fahrzeug verschiedene Sicherheitseinrichtungen vorgesehen. Eine solche Sicherheitseinrichtung kann beispielsweise ein mit einem Gasgenerator ausgerüstetes Gassackmodul darstellen. Im Falle einer bevorstehenden Kollision des Fahrzeugs mit einem anderen Objekt setzt der Gasgenerator ein Druckgas frei, das einen Gassack aus dem Gassackmodul entfaltet, wodurch die Fahrzeuginsassen zurückgehalten werden. Weitere Anwendungsfälle sind Gasgeneratoren für Gurtstraffer oder einen Fußgängeraufprallschutz.

Gasgeneratoren dienen der Erzeugung eines Druckgases und sind in verschiedenen Ausführungsformen bekannt. Grundsätzlich verwenden Gasgeneratoren ein Treibladungselement, das innerhalb des Gasgenerators angeordnet ist und nach Aktivierung durch einen elektrischen Anzünder ein Druckgas freisetzt, welches zum Aufblasen eines Gassacks oder zum Antrieb eines Gurtstraffers verwendet werden kann.

Treibladungselemente liegen in Form von Tabletten vor, die auf verschiedene Weise hergestellt werden können. Üblicherweise werden derartige Tabletten durch Verpressen eines Treibladungskomposits hergestellt. Das Treibladungskomposit liegt vor dem Verpressen als ein pulverförmiges Gemisch vor und umfasst als Hauptkomponente ein pyrotechnisches Material, das einen Brennstoff und ein Oxidationsmittel umfasst. Dem Treibladungskomposit können weitere Komponenten zugesetzt sein wie Abbrandmodifikatoren, Binder, Stabilisatoren, Trocknungsmittel und Schlackebildner.

Die oben genannten Komponenten werden vor dem Verpressen zum Treibladungselement miteinander vermischt. Dazu wird werden die Komponenten miteinander vermahlen. Um das Vermahlen der verschiedenen Komponenten des Treibladungskomposits und das anschließende Verpressen zum Treibladungselement zu verbessern, ist es bekannt, dem Treibladungskomposit vor den genannten Verfahrensschritten bestimmte Verarbeitungshilfsmittel zuzusetzen. Verarbeitungshilfsmittel wirken bei der Herstellung der Treibladungstablette insbesondere als Presshilfen, Rieselhilfen und/oder als Gleitmittel und verbessern damit die Handhabung des Treibladungskomposits und des Treibladungselements.

Beispiele für aus dem Stand der Technik bekannte Verarbeitungshilfsmittel sind Polyethylenglykol, Cellulose, Methylcellulose, Graphit, Wachs, Calciumstearat, Magnesiumstearat, Zinkstearat, Bornitrit, Talkum, Bentonit, Siliziumdioxid und Molybdänsulfit sowie deren Gemische.

Darüber hinaus können Verarbeitungshilfsmittel auch wesentliche Merkmale des fertiggepressten Treibladungselements beeinflussen wie Anzündbarkeit und Abbrandverhalten. Folglich ist man bestrebt, neue Verarbeitungshilfsmittel zu finden, die sich zur Herstellung eines Treibladungselements für eine Sicherheitseinrichtung eignen sowie die Eigenschaften des Treibladungskomposits und/oder des Treibladungselements verbessern.

Insofern liegt der vorliegenden Erfindung die Aufgabe zugrunde, ein Verarbeitungshilfsmittel bereitzustellen, das eine einfache und kostengünstige Herstellung eines Treibladungselements seitens Verfahrens- und Materialkosten ermöglicht sowie die für den Einsatz in einem Treibladungselement gestellten Leistungsanforderungen erfüllt.

Die Aufgabe wird erfindungsgemäß gelöst durch ein Treibladungselement für eine Sicherheitseinrichtung nach Anspruch 1.

Vorteilhafte Ausführungsformen des erfindungsgemäßen Treibladungselements sind in den Unteransprüchen angegeben, die wahlweise miteinander kombiniert werden können.

Erfindungsgemäß wird die Aufgabe gelöst durch ein Treibladungselement für eine Sicherheitseinrichtung, wobei das Treibladungselement die folgenden Komponenten umfasst:
(A) mindestens ein pyrotechnisches Material;
(B) mindestens ein Verarbeitungshilfsmittel auf Basis einer Monocarbonsäure mit der folgenden Formel

   R-COOH

   wobei R einen organischen Rest darstellt.

Die Erfindung beruht auf der Erkenntnis der Erfinder, dass sich eine Monocarbonsäure als Verarbeitungshilfsmittel für die Herstellung eines Treibladungselements eignet. Die Verwendung der Monocarbonsäure ergibt Treibladungskomposite mit einer deutlich höheren Schüttdichte als Treibladungskomposite, die mit herkömmlichen Verarbeitungshilfsmitteln wie Stearat-Salzen hergestellt worden sind. Eine höhere Schüttdichte bedeutet eine höhere Dichte des pyrotechnischen Materials pro Volumeneinheit, womit die Verarbeitbarkeit des Treibladungskomposits verbessert wird. Ferner weisen Monocarbonsäuren gegenüber bekannten Verarbeitungshilfsmitteln auf Basis von negativ geladenen Carboxylaten eine verringerte Oxidationsempfindlichkeit auf. Somit sind die erfindungsgemäßen Treibladungselemente stabiler gegenüber Oxidationsreaktionen. Folglich weist das erfindungsgemäße Treibladungselement eine erhöhte Stabilität gegenüber hohen Temperaturen und Temperaturwechseln auf. Außerdem ist die Bruchfestigkeit der Treibladungselemente verbessert, und der Zusatz von Trocknungsmitteln kann deutlich verringert werden.

Das erfindungsgemäße Treibladungselement ist zur Verwendung in einem Gasgenerator für eine Sicherheitseinrichtung vorgesehen. Die bekanntesten Sichereinrichtungen stellen Fahrzeuginsassenrückhaltesysteme dar, wie sie in Fahrzeugen zur Personenbeförderung verwendet werden. Ein solches System umfasst im Wesentlichen ein Gassackmodul mit einem Gasgenerator und einem an den Gasgenerator angeschlossenen Gassack. Im Falle eines Auslöse-Szenarios stellt der Gasgenerator ein Druckgas bereit, das den Gassack entfaltet. Der entfaltete Gassack wird durch das einströmende Druckgas zudem gefüllt, um eine Rückhaltewirkung für einen Fahrzeuginsassen bereitzustellen. Hierbei kann das Druckgas durch Umsetzen des erfindungsgemäßen Treibladungselements im Gasgenerator bereitgestellt werden.

Des Weiteren ist vorgesehen, dass das Treibladungselement in anderen Sichereinrichtungen verwendet werden kann. Darunter fallen insbesondere Sichereinrichtungen umfassend Gassackmodule mit Gasgeneratoren für Elektromotorroller und Kindersitze sowie pyrotechnische Antriebe für Gurtstraffermodule. Ebenfalls vorgesehen ist die Verwendung des Treibladungselements in persönlicher Schutzausrüstung (PSA), beispielsweise in Gassackmodulen für Lawinenschutzbekleidung, Motorradhelme oder Fahrradhelme.

Erfindungsgemäß umfasst das Treibladungselement neben dem Verarbeitungshilfsmittel als Komponente (A) ein pyrotechnisches Material.

Das pyrotechnische Material der Komponente (A) kann einen Brennstoff und ein Oxidationsmittel umfassen.

Grundsätzlich ist der Brennstoff nicht eingeschränkt und es kann jeder im Stand der Technik bekannte Brennstoff verwendet werden, der sich für den Einsatz in einem Treibladungselement zur Verwendung in einem Gasgenerator eignet.

Der Brennstoff ist vorzugsweise aus der aus Guanidinnitrat, Nitroguanidin, Triaminoguanidinnitrat, Harnstoffnitrat, Nitroharnstoff, Nitropenta, Nitrotriazolon, Hexogen, Oktogen und deren Mischungen bestehenden Gruppe ausgewählt. Besonders bevorzugt ist der Brennstoff Guanidinnitrat und/oder Nitroguanidin. Guanidinnitrat ist der am meisten bevorzugte Brennstoff.

Das Oxidationsmittel ist ebenfalls nicht eingeschränkt, und es kann jedes im Stand der Technik bekannte Oxidationsmittel verwendet werden, das sich für den Einsatz in einem Treibladungselement zur Verwendung in einem Gasgenerator eignet.

Das Oxidationsmittel ist bevorzugt ausgewählt aus der Gruppe bestehend aus Nitraten, Oxiden und/oder Mischoxiden der Alkalimetalle, Erdalkalimetalle und Übergangsmetalle, Übergangsmetall-Nitrathydroxiden, Chloraten, Perchloraten, Ammoniumhydraten, Sulfaten, Phosphaten, Oxalaten, Dinitramiden, Peroxiden und Kombination davon.

Neben dem pyrotechnischen Material der Komponente (A) umfasst das Treibladungselement erfindungsgemäß mindestens ein Verarbeitungshilfsmittel der Komponente (B) auf Basis einer Monocarbonsäure mit der Formel R-COOH, wobei R einen organischen Rest darstellt.

Das Verarbeitungshilfsmittel auf Basis einer Monocarbonsäure ist grundsätzlich nicht eingeschränkt und es kann jede bekannte Monocarbonsäure mit einem organischen Rest R als Verarbeitungshilfsmittel verwendet werden.

Im Sinne der Erfindung wird unter Monocarbonsäure eine chemische Verbindung verstanden, die mit nur einer Carboxy-Gruppe (-COOH) funktionalisiert ist. Dementsprechend weist der organische Rest R lediglich eine Carboxy-Gruppe auf. Di- oder Tricarbonsäuren werden von der Erfindung ausgeschlossen.

Gemäß einem ersten Aspekt der Erfindung umfasst der organische Rest R ein aliphatisches und/oder aromatisches Kohlenwasserstoffgerüst. Das aromatische Kohlenwasserstoffgerüst kann ein homoaromatisches oder heteroaromatisches Kohlenwasserstoffgerüst sein. Das aliphatische Kohlenwasserstoffgerüst kann ein lineares, verzweigtes oder zyklisches Kohlenwasserstoffgerüst sein, welches wahlweise ein oder mehrere Heteroatome enthalten kann. Die Heteroatome im aliphatischen oder aromatischen Kohlenwasserstoffgerüst können aus der aus Stickstoff, Sauerstoff, Schwefel und Phosphor bestehenden Gruppe ausgewählt sein. Ferner kann das Kohlenwasserstoffgerüst gesättigt oder ungesättigt sein.

Ein weiterer Aspekt sieht vor, dass das Kohlenwasserstoffgerüst ausgewählt ist aus der Gruppe bestehend aus C₁-C₁₇-Alkyl, C₂-C₁₇-Alkenyl, C₂-C₁₇-Alkinyl, C₆-C₁₂-Cycloalkyl und C₆-C₁₄-Aryl sowie Mischungen davon.

Der Begriff C₁-C₁₇-Alkyl umfasst im Sinne der Erfindung lineare oder verzweigte, gesättigte Kohlenwasserstoffreste mit 1 bis 17 Kohlenwasseratomen. Bevorzugte Kohlenwasserstoffreste umfassen beispielsweise Methyl, Ethyl, n-Propyl, Isopropyl, n-Butyl, sec-Butyl, iso-Butyl, tert-Butyl, n-Pentyl, iso-Pentyl, 2,2-Dimethylpropyl, n-Hexyl, iso-Hexyl, 2-Ethylhexyl, n-Heptyl, iso-Heptyl, n-Octyl, isoOctyl, 1-Dodecyl,1-Tetradecyl und 1-Heptadecyl.

Der Begriff C₂-C₁₇-Alkenyl umfasst im Sinne der Erfindung lineare oder verzweigte mindestens teilweise ungesättigte Kohlenwasserstoffreste mit 2 bis 17 Kohlenstoffatomen, wobei die Kohlenwasserstoffreste zumindest eine C-C-Doppelbindung aufweisen Bevorzugte Kohlenwasserstoffreste umfassen beispielsweise Ethenyl, 1-Propenyl, 2-Propenyl, 1-Butenyl, 2-Butenyl, iso-Butenyl, 1-Pentenyl, 1-Hexenyl, 1-Heptenyl, 1-Octenyl, 1-Nonenyl, 1- Decenyl, 1-Dodecenyl,1-Tetradecenyl und 1-Heptadecenyl.

Der Begriff C₂-C₁₇-Alkinyl umfasst im Sinne der Erfindung lineare oder verzweigte mindestens teilweise lineare ungesättigte Kohlenwasserstoffreste mit 1 bis 17 Kohlenstoffatomen wobei die Kohlenwasserstoffreste zumindest eine C-C-Dreifachbindung aufweisen. Bevorzugte Kohlenwasserstoffreste umfassen beispielsweise Ethinyl, 1-Propinyl, 2- Propinyl, 1-Butinyl, 2-Butinyl, iso-Butinyl, 1-Pentinyl, 1- Hexinyl, 1-Heptinyl, 1-Octinyl, 1-Noninyl, 1- Decinyl, 1-Dodecinyl,1-Tetradecinyl und 1-Heptadecinyl.

Der Begriff C₆-C₁₂-Cycloalkyl umfasst im Sinne der Erfindung zyklische, gesättigte Kohlenwasserstoffreste mit 6 bis 18 Kohlenstoffatomen. Bevorzugte Kohlenwasserstoffreste umfassen beispielsweise Cyclohexyl, Cycloheptyl, Cyclooctyl, Cyclononyl und Cyclodecanyl.

Der Begriff C₆-C₁₄-Aryl umfasst im Sinne der Erfindung aromatische Kohlenwasserstoffreste mit sechs bis vierzehn Kohlenstoffatomen. Unter dem Begriff fallen dementsprechend monocyclische, bicyclische und tricyclische aromatische Kohlenwasserstoffreste. Bevorzugte aromatische Kohlenwasserstoffreste umfassen beispielsweise Phenyl, Naphthyl und Anthracyl.

Ebenfalls von dem Begriff C₆-C₁₄-Aryl umfasst sind heteroaromatische Kohlenwasserstoffreste mit wenigstens einem Heteroatom, das ausgewählt ist aus der Gruppe bestehend aus Stickstoff, Sauerstoff, Schwefel und Phosphor. Geeignete heteroaromatische Kohlenwasserstoffreste mit wenigstens einem Heteroatom umfassen beispielsweise Pyridyl, Furanyl, Pyrrolyl und Indolyl.

Als aliphatische Kohlenwasserstoffgerüste mit wenigstens einem Sauerstoffatom können insbesondere Ether und/oder Ester verwendet werden.

Geeignete Beispiele für Etherreste sind 2-Ethoxyethyl, 2-Methoxyethyl, 4-Methoxybutyl, 2-(2-Methoxyethoxy)ethyl und PEGyloxymethyl (PEG = Polyethylenglykol mit variabler Molmasse).

Beispiele für Esterreste umfassen 2-Acetoxymethyl und 2-(2-Methoxyacetoxy)methyl.

Ein geeignetes Beispiel für ein aliphatisches Kohlenwasserstoffgerüst mit wenigstens einem Schwefelatom ist Thiol-PEG4.

Als aliphatische Kohlenwasserstoffgerüste mit wenigstens einem Stickstoffatom können Amine, insbesondere Aminoether, verwendet werden.

Geeignete Beispiele sind 2-Dimethylamino-1-butyl und 2-(2-Dimethylaminoethoxy)ethyl.

Geeignete Beispiele für ein aliphatisches, ungesättigtes Kohlenwasserstoffgerüst mit wenigstens einem Heteroatom sind organische Reste wie 6-Methoxy-1-hexenyl, Allyloxymethyl und 4-Ethoxy-2-butinyl.

Ein weiterer Aspekt der Erfindung sieht vor, dass die Monocarbonsäure bei Raumtemperatur flüssig ist. Unter Raumtemperatur wird eine Temperatur von 25°C verstanden. Auf diese Weise kann eine besonders gute Benetzbarkeit des pyrotechnischen Materials der Komponente (A) gewährleistet werden.

Gemäß einer weiteren Ausführungsform kann die Monocarbonsäure einen Schmelzpunkt in einem Bereich von 25 - 70°C aufweisen, bevorzugt von 50 - 65°C, besonders bevorzugt von 55 - 60°C. Eine solche Monocarbonsäure ist bei Raumtemperatur fest und kann durch Zufuhr von Wärme verflüssigt werden beispielsweise durch Reibungswärme wie sie beim Mahlen Komponenten des Treibladungskomposits entsteht. Somit kann eine Monocarbonsäure mit einem Schmelzpunkt im oben genannten Bereich im zunächst festen Zustand gehandhabt und zu der Komponente (A) hinzugegeben werden. Anschließend kann die beim Vermischen, insbesondere beim Mahlen, der Komponenten entstehende Reibungswärme die Monocarbonsäure schmelzen, sodass eine besonders gute Vermischung mit dem pyrotechnischen Material erreicht wird. Insofern kann eine solche Monocarbonsäure besonders einfach gehandhabt werden.

Gemäß einem weiteren Aspekt handelt es sich bei der Monocarbonsäure um eine unverzweigte gesättigte Alkansäure. Eine derartige Alkansäure kann auch als Fettsäure bezeichnet werden.

Bevorzugt weist die unverzweigte gesättigte Alkansäure die Summenformel CₙH₂ₙ₊₁COOH auf, worin n eine natürliche Zahl von 1 bis 17 ist, bevorzugt von 3 bis 12, besonders bevorzugt von 4 bis 9.

Beispielsweise kann die Alkansäure aus der aus Ethansäure, Propansäure, Butansäure, Pentansäure, Hexansäure, Heptansäure, Octansäure, Nonansäure, Decansäure, Hexadecansäure, Undecansäure, Dodecansäure, Tridecansäure, Tetradecansäure, Pentadecansäure, Hexadecansäure, Heptadecansäure und Octadecansäure sowie Kombinationen davon bestehenden Gruppe ausgewählt sein.

Besonders bevorzugt wird als Verarbeitungshilfsmittel auf Basis einer Monocarbonsäure n-Heptansäure verwendet.

Ferner kann das Treibladungselement als Komponente (C) weitere Zusatzstoffe umfassen, die ausgewählt sind aus der Gruppe bestehend aus Trocknungsmitteln, Abbrandmodifikatoren, Bindern, Stabilisatoren und Schlackebildner sowie Kombinationen davon.

Geeignete Zusatzstoffe sind beispielsweise Eisenoxid, Magnesiumoxid, amorphes Silica, hydrophobes Silica, Calciumstearat, Schmieröl, Polyethylenglykol, Zellulose, Methylzellulose, Graphit, Wachs, Magnesiumstearat, Zinkstearat, Bornitrid, Talkum, Bentonit, Siliziumdioxid und Molybdänsulfid.

Gemäß einem weiteren Aspekt umfasst das Treibladungselement die folgenden Komponenten:
(A) 85 bis 99,99 Gew.-%, vorzugsweise 90 bis 98 Gew.-%, des mindestens einen pyrotechnischen Materials,
(B) 0,01 bis 5 Gew.-%, vorzugsweise 0,05 bis 1% Gew.-%, besonders bevorzugt 0,1 bis 1 Gew.-%, des mindestens einen Verarbeitungshilfsmittels auf Basis einer Monocarbonsäure, vorzugsweise einer Monocarbonsäure mit einem C₃-C₉-Alkylrest, und
(C) 0 bis 15 Gew.-%, vorzugsweise 1 bis 9 Gew.-%, weitere Zusatzstoffe,
wobei sich die Anteile der Komponenten (A) bis (C) zu 100 Prozent ergänzen.

Verarbeitungshilfsmittel auf Basis von Monocarbonsäuren sind im Gegensatz zu den herkömmlich verwendeten Verarbeitungshilfsmitteln auf Basis von Carboxylaten stabil gegenüber Hydrolyse. Somit kann auch die Menge an Zusatzstoffen, insbesondere die Menge an Trocknungsmittel, reduziert werden, die bekannter Weise benötigt werden, um die Lagerfähigkeit des Treibladungselements sicherzustellen. Bevorzugt kann die Verwendung von Trocknungsmitteln im Treibladungselement durch die Verwendung von Verarbeitungshilfsmitteln auf Basis von Monocarbonsäure vollständig vermieden werden.

Das Treibladungselement ist daher besonders bevorzugt frei von Stearat-Salzen als Verarbeitungshilfsmittel.

Ferner betrifft die Erfindung ein Verfahren zur Herstellung eines Treibladungselements. Das Verfahren umfasst die folgenden Schritte:
a) Mischen des mindestens einen pyrotechnischen Materials, wahlweise der weiteren Zusatzstoffe, und des mindestens einen Verarbeitungshilfsmittels auf Basis einer Monocarbonsäure;
b) Mahlen des mindestens einen pyrotechnischen Materials, wahlweise der weiteren Zusatzstoffe und des mindestens einen Verarbeitungshilfsmittels auf Basis einer Monocarbonsäure unter Erhalt eines Treibladungskomposits; und
c) Pressen des Treibladungskomposits unter Ausbildung eines Treibladungselements.

Mit dem oben beschriebenen Verfahren zur Herstellung eines Treibladungselements kann besonders einfach und kostengünstig ein solches Treibladungselement hergestellt werden. Die Zugabe eines Verarbeitungshilfsmittels auf Basis einer Monocarbonsäure ermöglicht insbesondere ein verbessertes Mischen der oben genannten Komponenten im ersten Verfahrensschritt. Dadurch kann die Menge des eingesetzten Verarbeitungsmittels reduziert und/oder eine höhere Schüttdichte des Treibladungskomposits erreicht werden. Darüber hinaus wirkt das Verarbeitungshilfsmittel auf Basis einer Monocarbonsäure als ein Gleitmittel sowie als eine Rieselhilfe, sodass die Handhabung, insbesondere das Umfüllen des Treibladungskomposits zwischen einzelnen, bei der Herstellung verwendeten Behältnissen vereinfacht wird. Beispielsweise kann das Treibladungskomposit besonders einfach von einer Mühle in eine Pressmatrize umgefüllt werden, ohne dass ein Anhaften an den Wänden der Mühle und der Pressmatrize stattfindet. Ohne an eine Theorie gebunden zu sein wird vermutet, dass das Verarbeitungshilfsmittel insbesondere ein Verklumpen und Aggregieren der einzelnen Komponenten verhindert und dementsprechend ein Anhaften der einzelnen Komponenten des Treibladungskomposits an einem Herstellungswerkzeug, beispielsweise einer Pressmatrize oder einem Pressstempel, erschwert bzw. unterbindet.

Insbesondere kann das Verarbeitungshilfsmittel auf Basis einer Monocarbonsäure zu den bereits vermischten Komponenten nachträglich hinzugefügt werden. Mit anderen Worten werden das pyrotechnische Material und wahlweise die weiteren Zusatzstoffe vorgelegt und anschließend mit dem Verarbeitungshilfsmittel auf Basis einer Monocarbonsäure versetzt.

Vorzugsweise erfolgt die Zugabe des Verarbeitungshilfsmittels unmittelbar vor dem Verfahrensschritt b), also vor dem Mahlen der einzelnen Komponenten.

Die Erfindung betrifft somit auch die Verwendung einer Monocarbonsäure als ein Verarbeitungshilfsmittel bei der Herstellung eines Treibladungselements für eine Sicherheitseinrichtung. Hinsichtlich der Eigenschaften und Vorteile der Monocarbonsäure wird auf die vorherigen Ausführungen verwiesen.

Gemäß einem Aspekt stellt das Verarbeitungshilfsmittel ein Mahl- und Presshilfsmittel bei der Herstellung eines Treibladungselements für eine Sicherheitseinrichtung dar.

### Beispiele

Die Erfindung wird nachfolgend anhand von Beispielen beschrieben, die jedoch nicht in einem einschränkenden Sinn auszulegen sind.

### Beispiel 1:

55 g Guanidinnitrat als Brennstoff und 45 g basisches Kupfernitrat als Oxidationsmittel werden vorgelegt. Der Brennstoff und das Oxidationsmittel stellen zusammen ein pyrotechnisches Material dar. Anschließend wird zu dem pyrotechnischen Material 0,1 g n-Heptansäure als Verarbeitungshilfsmittel hinzugegeben. Die Komponenten werden miteinander vermahlen unter Erhalt eines Treibladungskomposits.

Das Treibladungskomposit weist nach dem Vermischen eine Schüttdichte von 0,65 - 0,8 g/cm³ gemäß DIN 53466 auf.

Das Treibladungskomposit wird anschließend zu einem Treibladungselement verpresst. Dazu wird ein Druck von 1 * 10⁴ Bar auf eine Menge von 200 mg Treibladungskomposit ausgeübt, um ein Treibladungselement in Form einer Tablette zu erhalten.

### Beispiel 2:

55 g Guanidinnitrat als Brennstoff und 30 g basisches Kupfernitrat sowie 15 g Kaliumperchlorat als Oxidationsmittel werden vorgelegt. Der Brennstoff und das Oxidationsmittel stellen zusammen ein pyrotechnisches Material dar. Anschließend wird zu dem pyrotechnischen Material 0,1 g n-Heptansäure als Verarbeitungshilfsmittel hinzugegeben. Die Komponenten werden miteinander vermahlen unter Erhalt eines Treibladungskomposits.

Das Treibladungskomposit weist nach dem Vermischen eine Schüttdichte von 0,65 - 0,8 g/cm³ gemäß DIN 53466 auf.

Das Treibladungskomposit wird anschließend zu einem Treibladungselement verpresst. Dazu wird ein Druck von 1 * 10⁴ Bar auf eine Menge von 200 mg Treibladungskomposit ausgeübt, um ein Treibladungselement in Form einer Tablette erhalten.

### Beispiel 3:

60 g Guanidinnitrat als Brennstoff und 40 g Kaliumperchlorat als Oxidationsmittel werden vorgelegt. Der Brennstoff und das Oxidationsmittel stellen zusammen ein pyrotechnisches Material dar. Anschließend wird zu dem pyrotechnischen Material 0,1 g n-Heptansäure als Verarbeitungshilfsmittel hinzugegeben. Die Komponenten werden miteinander vermahlen unter Erhalt eines Treibladungskomposits.

Das Treibladungskomposit weist nach dem Vermischen eine Schüttdichte von 0,4 - 0,7 g/cm³ gemäß DIN 53466 auf.

Das Treibladungskomposit wird anschließend zu einem Treibladungselement verpresst. Dazu wird ein Druck von 1 * 10⁴ Bar auf eine Menge von 50 mg Treibladungskomposit ausgeübt, um ein Treibladungselement in Form einer Tablette erhalten.

### Beispiel 4:

53 g Guanidinnitrat als Brennstoff und 47 g basisches Kupfernitrat als Oxidationsmittel werden miteinander vermischt. Der Brennstoff und das Oxidationsmittel stellen zusammen ein pyrotechnisches Material dar. Anschließend wird zu dem pyrotechnischen Material 0,1 g n-Heptansäure als Verarbeitungshilfsmittel hinzugegeben. Die Komponenten werden miteinander vermahlen unter Erhalt eines Treibladungskomposits.

Das Treibladungskomposit weist nach dem Vermischen eine Schüttdichte von 0,65 - 0,8 g/cm³ gemäß DIN 53466 auf.

Das Treibladungskomposit wird anschließend zu einem Treibladungselement verpresst. Dazu wird ein Druck von 1 * 10⁴ Bar auf eine Menge von 100 mg Treibladungskomposit ausgeübt, um ein Treibladungselement in Form einer Tablette erhalten.

### Referenzbeispiel 1:

52 g Guanidinnitrat als Brennstoff und 48 g basisches Kupfernitrat als Oxidationsmittel werden miteinander vermischt. Der Brennstoff und das Oxidationsmittel stellen zusammen ein pyrotechnisches Material dar. Anschließend wird zu dem pyrotechnischen Material 0,4 g Calciumstearat als Verarbeitungshilfsmittel hinzugegeben. Die Komponenten werden miteinander vermahlen unter Erhalt eines Treibladungskomposits.

Das Treibladungskomposit weist nach dem Vermischen eine Schüttdichte von 0,55 - 0,7 g/cm³ gemäß DIN 53466 auf.

Das Treibladungskomposit wird anschließend zu einem Treibladungselement verpresst. Dazu wird ein Druck von 1 * 10⁴ Bar auf eine Menge von 200 mg Treibladungskomposit ausgeübt, um ein Treibladungselement in Form einer Tablette zu erhalten.

Das Referenzbeispiel 1 zeigt auf, dass die vierfache Menge eines nicht erfindungsgemäßen Verarbeitungshilfsmittels wie Calciumstearat verwendet werden muss, um ein fließfähiges und gut verarbeitbares Treibladungskomposit mit vergleichbarer Schüttdichte zu erhalten. Im Vergleich dazu kann in den erfindungsgemäßen Beispielen eine deutlich reduzierte Menge an Verarbeitungshilfsmittel verwendet werden. Dadurch kann die Sauerstoffbilanz des Treibladungselements optimiert werden, da die Bereiche für die übrigen, im Treibladungselement vorhandenen Komponenten weiter gefasst werden können. Dies erlaubt beispielsweise den Einsatz einer höheren Menge an Brennstoff im Treibladungselement.

### Referenzbeispiel 2:

52 g Guanidinnitrat als Brennstoff und 48 g basisches Kupfernitrat als Oxidationsmittel werden miteinander vermischt. Der Brennstoff und das Oxidationsmittel stellen zusammen ein pyrotechnisches Material dar. Anschließend wird zu dem pyrotechnischen Material 0,1 g Calciumstearat als Verarbeitungshilfsmittel hinzugegeben. Die Komponenten werden miteinander vermahlen unter Erhalt eines Treibladungskomposits.

Das Treibladungskomposit weist nach dem Vermischen eine Schüttdichte von 0,5 - 0,65 g/cm³ gemäß DIN 53466 auf.

Das Treibladungskomposit wird anschließend zu einem Treibladungselement verpresst. Dazu wird ein Druck von 1 * 10⁴ Bar auf eine Menge von 200 mg Treibladungskomposit ausgeübt, um ein Treibladungselement in Form einer Tablette zu erhalten.

Referenzbeispiel 2 belegt, dass die Verwendung eines nicht erfindungsgemäßen Verarbeitungshilfsmittels in der gleichen Menge wie das erfindungsgemäße Verarbeitungshilfsmittel zu einem Treibladungskomposit mit einer verringerten Schüttdichte führt. Aus der verringerten Schüttdichte folgt eine schlechtere Fließfähigkeit und Verarbeitbarkeit des Treibladungskomposits im Vergleich zu einem Treibladungskomposit, das mit einem erfindungsgemäßen Verarbeitungshilfsmittel hergestellt wurde. Aus dem Referenzbeispiel 2 kann somit geschlossen werden, dass eine höhere Menge an nicht erfindungsgemäßen Verarbeitungshilfsmittel verwendet werden muss, um dieselbe Fließfähigkeit und Verarbeitbarkeit wie bei einem Treibladungskomposit mit einem erfindungsgemäßen Verarbeitungshilfsmittel zu erhalten.

## Patentansprüche

1. Treibladungselement für eine Sicherheitseinrichtung, wobei das Treibladungselement die folgenden Komponenten umfasst:
(A) mindestens ein pyrotechnisches Material;
(B) mindestens ein Verarbeitungshilfsmittel auf Basis einer Monocarbonsäure mit der folgenden Formel
R-COOH
wobei R einen organischen Rest darstellt.

2. Treibladungselement nach Anspruch 1, **dadurch gekennzeichnet, dass** der organische Rest R ein aliphatisches und/oder aromatisches Kohlenwasserstoffgerüst umfasst, bevorzugt ein homoaromatisches oder heteroaromatisches Kohlenwasserstoffgerüst und/oder ein lineares, verzweigtes oder zyklisches, gesättigtes oder ungesättigtes Kohlenwasserstoffgerüst, wobei das aliphatische Kohlenwasserstoffgerüst wahlweise wenigstens ein Heteroatom aufweist, das aus der aus Sauerstoffatom, Stickstoffatom, Schwefelatom und Phosphoratom bestehenden Gruppe ausgewählt ist.

3. Treibladungselement nach Anspruch 2, **dadurch gekennzeichnet, dass** das Kohlenwasserstoffgerüst ausgewählt ist aus der Gruppe bestehend aus C₁-C₁₇-Alkyl, C₂-C₁₇-Alkenyl, C₂-C₁₇-Alkinyl, C₆-C₁₂-Cycloalkyl und C₆-C₁₄-Aryl sowie Mischungen davon.

4. Treibladungselement nach einem der vorhergehenden Ansprüche, **dadurch gekennzeichnet, dass** es sich bei der Monocarbonsäure um eine lineare Alkansäure mit der Summenformel CₙH₂ₙ₊₁COOH handelt, worin n eine natürliche Zahl von 1 bis 17 ist, bevorzugt von 3 bis 12, besonders bevorzugt von 4 bis 9, weiter bevorzugt, dass es sich bei der Monocarbonsäure um n-Heptansäure handelt.

5. Treibladungselement nach einem der vorhergehenden Ansprüche, **dadurch gekennzeichnet, dass** die Monocarbonsäure bei Raumtemperatur flüssig ist.

6. Treibladungselement nach einem der Ansprüche 1 bis 4, **dadurch gekennzeichnet, dass** die Monocarbonsäure einen Schmelzpunkt in einem Bereich von 25 - 70°C aufweist, bevorzugt von 50 - 65°C, besonders bevorzugt von 55 - 60°C.

7. Treibladungselement nach einem der vorhergehenden Ansprüche, **dadurch gekennzeichnet, dass** das Treibladungselement die folgenden Komponenten umfasst:
(A) 85 bis 99,9 Gew.-%, vorzugsweise 90 bis 98 Gew.-%, des mindestens einen pyrotechnischen Materials,
(B) 0,01 bis 5 Gew.-%, vorzugsweise 0,05 bis 1 Gew.-%, besonders bevorzugt 0,1 bis 1 Gew.-%, des mindestens einen Fließregulierungsmittels auf Basis einer Monocarbonsäure, vorzugsweise einer Monocarbonsäure mit einem C₃-C₉-Alkylrest, und
(C) 0 bis 15 Gew.-%, vorzugsweise 1 bis 9 Gew.-%, weitere Zusatzstoffe, wobei sich die Anteile der Komponenten (A) bis (C) zu 100 Prozent ergänzen.

8. Verfahren zur Herstellung eines Treibladungselements nach einem der vorhergehenden Ansprüche, **dadurch gekennzeichnet, dass** das Verfahren die folgenden Schritte aufweist:
a) Mischen des mindestens einen pyrotechnischen Materials, wahlweise der weiteren Zusatzstoffe und des mindestens einen Verarbeitungshilfsmittels auf Basis einer Monocarbonsäure;
b) Mahlen des mindestens einen pyrotechnischen Materials, wahlweise der weiteren Zusatzstoffe und des mindestens einen Verarbeitungshilfsmittels auf Basis einer Monocarbonsäure unter Erhalt eines Treibladungskomposits; und
c) Pressen des Treibladungskomposits unter Ausbildung eines Treibladungselements.

9. Verwendung einer Monocarbonsäure als ein Verarbeitungshilfsmittel bei der Herstellung eines Treibladungselements für eine Sicherheitseinrichtung.

10. Verwendung einer Monocarbonsäure nach Anspruch 9, **dadurch gekennzeichnet, dass** das Verarbeitungshilfsmittel ein Mahl- und Presshilfsmittel darstellt.
